# EUROPEAN PATENT APPLICATION

(11) **EP 2 347 686 A1**
(43) Date of publication of application: **27.07.2011**
(21) Application number: 10151679.7
(22) Date of filing: 26.01.2010
(51) Int. Cl.: A47J 43/07

(54) **Juicer having safety mechanism with its handle**

(71) Applicant: Ya Horng Electronic Co., Ltd., Antin Hsiang, Tainan Hsien (TW)
(72) Inventor: Huang, Jin Yi, Antin Hsiang, Tainan Hsien (TW)
(74) Representative: Chaillot, Geneviève

(57) **Abstract**

A juicer having safety mechanism with its handle is disclosed, where the handle is used to buckle its cover. A contact switch is fixed in the body of the juicer and connected in series with a starting circuit of the juicer motor. As the handle buckles the cover, a moving element with a through hole is forced to move down, which enables the through hole to be aligned with a contact member of the contact switch. During the handle buckling the cover, the prop pillar is held to pass through the through hole of the moving element to reach the contact member of the contact switch for turning on the contact switch. On the other hand, if either the cover or the handle is not in place, the contact switch is in power disconnection. Accordingly, the objective of the safety protection can be truly fulfilled.

## Description

### BACKGROUND OF THE INVENTION

### Field of the Invention

This invention relates generally to a juicer having safety mechanism with its handle and more particularly to one that is capable of activating an instant pause, subject to a lifting on the handle that buckles the cover, which is to prevent hands from being hurt by blades once the juicer is operational.

### Description of the Prior Art

The appearance of a prior juicer comprises a body, and a cover on top of the body. The body contains a motor, and accommodates a juice gathering chamber. A juice filter is set up in the gathering chamber, where the juice filter encloses a blade turntable driven by the axle of the motor. When the juicer is operating, the axle of the motor drives the blade turntable, and the blade turntable is ready to extract juice from food ingredients (for instance: carrots) that are pushed through a food tube of the cover. The extracted juice is filtered by the juice filter and flows out from the outlet of the juice gathering chamber. To prevent hands from being hurt by blades as the juicer is operational, a prior safety protection means is designed to deactivate the motor once the cover is not capped in place. However, the assertion of this kind of safety protection is subject to the pressing of a contact switch by the cover that is in place. And the pressing of the contact switch determines the cover is in place. The contact switch is asserted by the reach of the cover, and that is actually achieved by touching the contact switch through a breach from outside. Therefore, there are occasions that impish children hold tools to press the contact switch through the breach of the body that could enable the working of the blade turntable, which would substantially jeopardize the safety of the user.

### SUMMARY OF THE INVENTION

In the light of the aforementioned drawbacks of the prior art, this inventor conceived the idea for the advanced improvement, and eventually the endeavors gave birth to this invention.

The objective of this invention is to provide a juicer having safety mechanism with its handle, capable of activating an instant pause to deactivate its motor subj ect to a lifting on the handle that buckles the cover.

To accomplish the aforesaid objective, the juicer having a handle to buckle its cover is provided with a contact switch fixed in its body and connected in series with a starting circuits of the motor; as the handle buckles the cover, the moving element with a through hole is forced to move down, which enables the through hole to be aligned with a contact member of the contact switch. The handle is provided with a protruded prop pillar penetrated in the body. During the handle buckling the cover, the prop pillar is held to pass through the through hole of the moving element to reach the contact member of the contact switch for turning on the contact switch; reversely, either the cover or the handle is not in place, the contact switch is in power disconnection. Accordingly, the obj ective of the safety protection can be truly fulfilled.

### BRIEF DESCRIPTION OF THE DRAWINGS

FIG. 1 is a three-dimensional diagram showing the structure of the exemplary embodiment of this invention;
FIG. 2 is a sectional view showing the structure of the exemplary embodiment of this invention;
FIG. 3 is a three-dimensional assembled view showing the partial structure of the exemplary embodiment of this invention;
FIG. 4 is an exploded view showing the partial structure of the exemplary embodiment of this invention;
FIG. 5 is a schematic diagram showing the structure of the release of the handle of the exemplary embodiment of this invention;
FIG. 6 is a schematic diagram showing the structure of the buckling of the handle of the exemplary embodiment of this invention; and
FIG. 7 is a schematic diagram showing the reach of the contact switch by the prop pillar of the exemplary embodiment of this invention.

### DETAILED DESCRIPTION OF THE INVENTION

To achieve the aforementioned objects of the present invention, the techniques adopted and the achievable function are detailed described with reference to the following exemplary embodiments and accompany drawing.

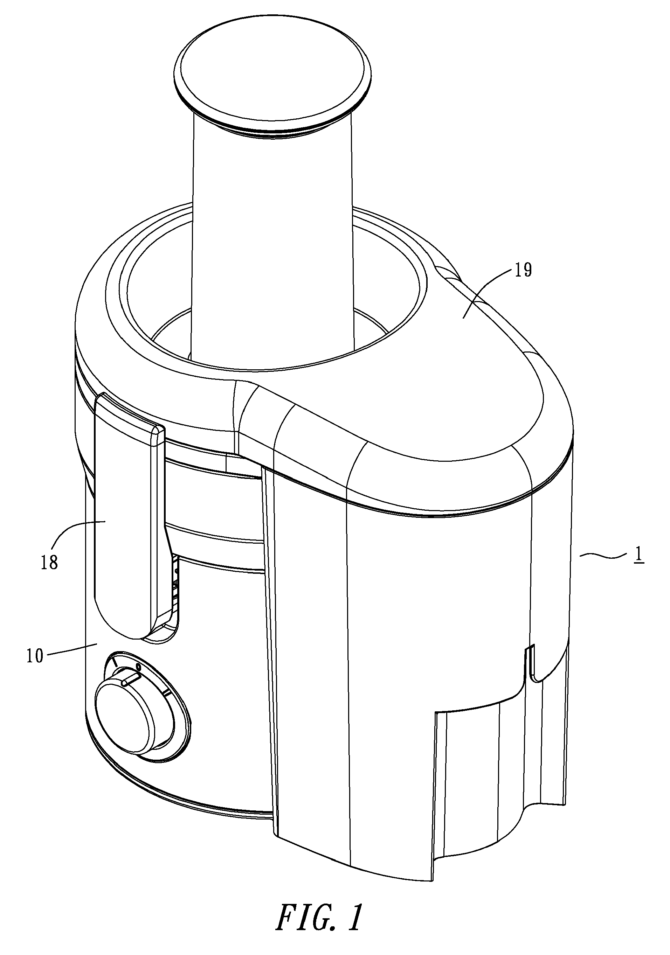

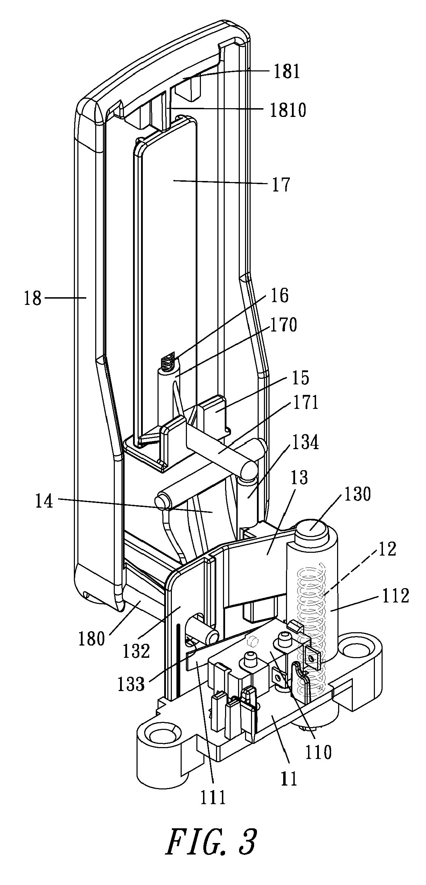

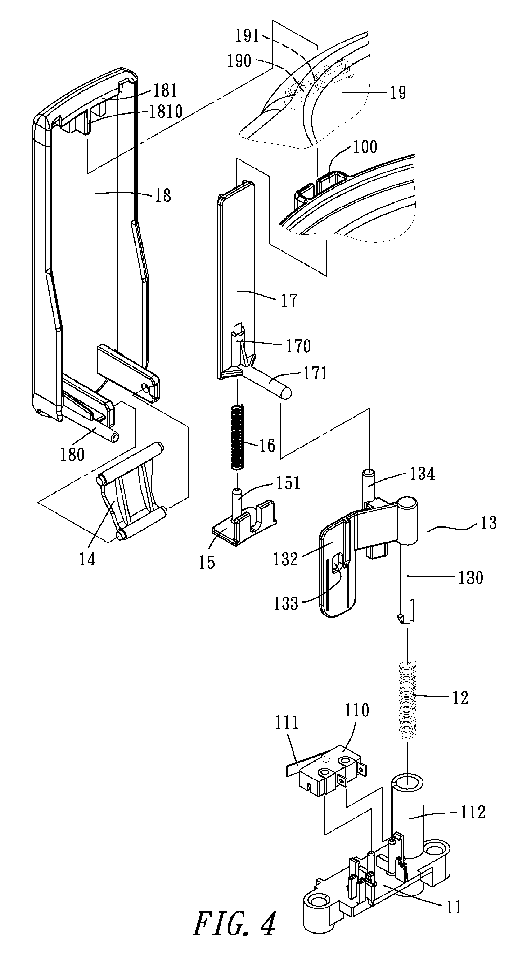

Referring to FIGS. 1∼4, the body 10 of the juicer of this invention is provided with a stand 11 (shown in FIGS. 3 & 4), where the stand 11 contains a contact switch 110 connected in series with a starting circuits of the motor of the juicer, and a contact member 111 of the contact switch 110 faces outward. The stand 11 is provided with a hollow upright cylinder 112 extending upward from its surface, where the upright cylinder 112 accommodates a first elastic member 12. A moving element 13 is set up on top of the stand 11, and a first post 130 is fixed at the moving element 13 corresponding to the upright cylinder 112 and extends downward, where the bottom portion of the first post 130 is inserted in the upright cylinder 112 and worn by the first elastic member 12, and is pushed up by the first elastic member 12 to have the moving element 13 oscillate up and down. The moving element 13 is provided with a carrying member 132 at the side near the contact member 111 of the contact switch 110, to block the contact member 111. And the carrying member 132 is provided with an oval-shaped hole 133 which is not aligned with the contact member 111 yet kept in line. The moving element 13 is provided with an upward extending second post 134 at its top. The second post 134 is provided with an immobilized fixing seat 15 at its lateral, where the fixing seat 15 has a sustaining stake 151 on its top, which is worn by a second elastic member 16; a slab 17 located on top of the fixing seat 15 is inserted in an embedding trough 100 attached on the outer wall of the body 10 with its top portion, and has an upright trough 170 at its bottom, to be embedded by the top end of the second elastic member 16 that is worn on the sustaining stake 151, so that the second elastic member 16 is empowered resilient force to push the slab 17 up. The slab 17 is provided with a pressing bar 171 extending to the top of the second post 134, where the pressing bar 171 touches the second post 134. The cover 19 is provided with a buckled groove 190 at its outer edge corresponding to the top of the slab 17, and the groove 190 has a breach 191 connected to the pressing bar 171. A handle 18 located at the exterior of the body 10 corresponding to the buckled groove 190 of the cover 19 is inserted in the body 10 with its bottom end in pinned connection with a pivotal member 14 in the body 10, has a prop pillar 180 facing the body 10 and extending from the location corresponding to the contact member 111, and its top is provided with a hook 181 facing the buckled groove 190 of the cover 19, where the center of the internal top side of the hook 181 has a downward extending clamping bar 1810 corresponding to the breach 191 in the middle of the buckled groove 190. Once the hook 181 secures in the buckled groove 190 of the cover 19, the clamping bar 1810 is available to enter the breach 191 to press the slab 17 down.

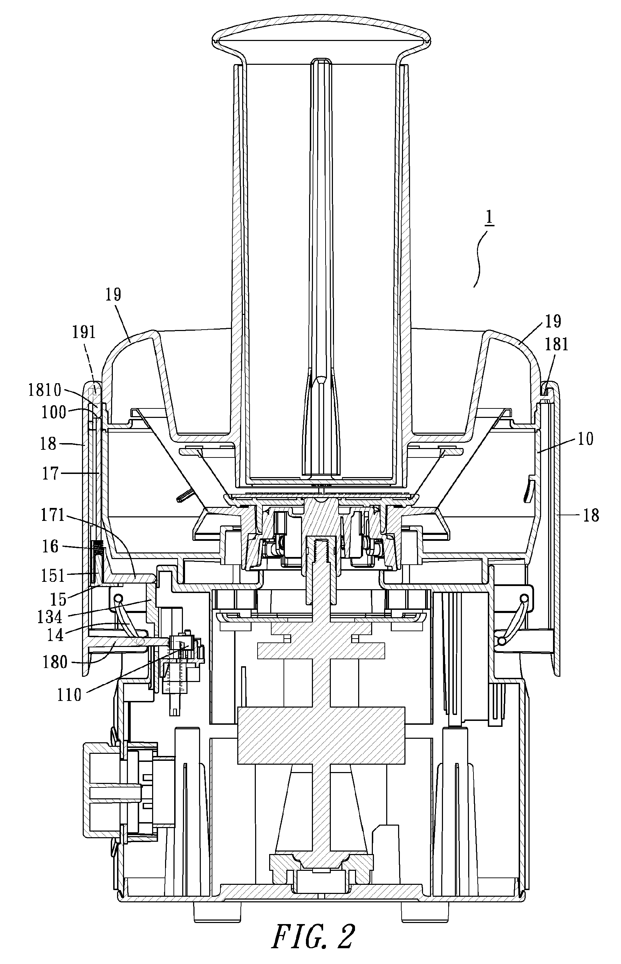

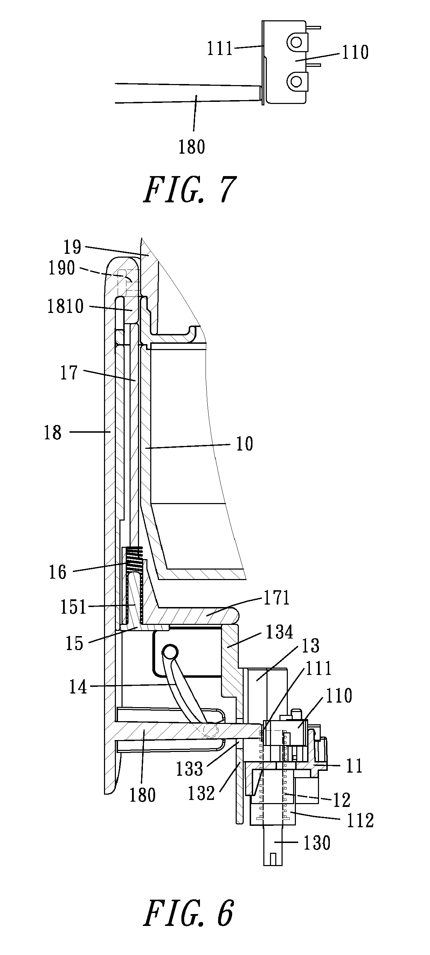

When the juicer is in use, referring to FIGS. 1 & 2, the cover 19 is capped on the body 10 and set in place, followed by the buckling of the handle 18, to secure the hook 181 of the handle 18 in the buckled groove 190 of the cover 19. As the handle 18 joins with the buckled groove 190 of the cover 19, the clamping bar 1810 of the handle 18 is driven to stretch in the breach 191 of the buckled groove 190 of the cover 19, to press down the slab 17 beneath the breach 191, where the slab 17 in turn squeezes the second elastic member 16 downward, and a pressing bar 171 moves down synchronously (shown in FIG. 2 & 6). The down move of the pressing bar 171 presses down the second post 134 and the moving element 13 below it, to align the through hole 133 of the moving element 13 with the contact member 111. At this moment, the prop pillar 180 of the handle 18 is swung up to pass through the through hole 133 to press the contact member 111 (shown in FIGS. 3, 6 & 7), which the pressing of the contact switch 110 empowers the starting circuits of the motor, to start up the motor.

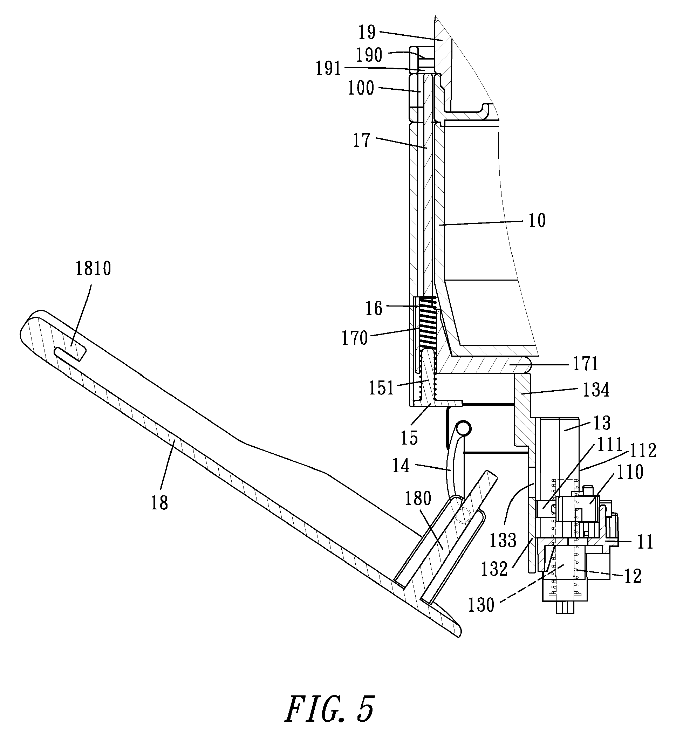

Once the handle 18 is released, shown in FIG. 5, the first elastic member 12 and the second elastic member 16 are resilient to lift the moving element 13 and the slab 17 up, to free the alignment of the through hole 133 of the carrying member 132 of the moving element 13 with the prop pillar 180. And the release of the handle 18 makes the prop pillar 180 not to point at the contact member 111; therefore, even a tool is inserted to press the slab 17 down, to align the through hole 133 of the moving element 13 with the contact member 111, the motor is unable to start because the prop pillar 180 of the handle 18 fails to press the contact member 111, which enables the juicer to achieve great safety protection.

Accordingly, this invention is surely able to accomplish the expected objective and function, and the detailed description could allow one skilled in the art to realize the invention; however, any equivalent embodiments or modifications without departing from the spirit and scope of the present invention are therefore intended to be embraced.

## Claims

1. A juicer (1) having safety mechanism with its handle (18), comprising:
1.) a contact switch (110), fixed in the body (10) of the juicer (1), and connected in series with a starting circuit of the motor, having a contact member (111) to control the turning on of said contact switch (110);
2.) a moving element (13), set up on top of said contact switch (110), where its bottom is lifted by a first elastic member (12), and having a through hole (133) corresponding to the contact member (111) of said contact switch (110) to line up with the contact member (111), located on top of the contact member (111) and having no alignment to each other;
3.) a slab (17), on top of said moving element (13), where its bottom is lifted by a second elastic member (16), and its top being placed to the bottom of a buckled groove (190) attached on the outer edge of the cover (19) of the juicer (1), where the buckled groove (190) is provided with a breach (191) connected to the top of said slab (17); and
4.) a handle (18), where its bottom is in pinned connection with the body (10), and its top being provided with a hook (181) joining with the buckled groove (190) of the cover (19), where the hook (181) is provided with a clamping bar (1810) to press said slab (17) down, which aligns the through hole (133) of said moving element (13) with the contact member (111) of said contact switch (110) horizontally; having a prop pillar (180) extending from the location corresponding to the contact member (11) of said contact switch (110) to stretch into the body (10), as the hook (181) securing the cover (19), the prop pillar (180) being available to pass through the through hole (133) of said moving element (13) to press the contact member (111) down, for the turning on said contact switch (110).

2. A juicer (1) having safety mechanism with its handle (18) as in claim (1) wherein said contact switch (110) is fixed on a stand (11), the stand (11) being provided with an upright cylinder (112) extending upward from its surface, where the upright cylinder (112) accommodates a first elastic member (12); said moving element (13) being set up on top of the stand (11), and a first post (130) extending downward corresponding to the upright cylinder (112), where the bottom portion of the first post (130) is inserted in the upright cylinder (112) and worn by the first elastic member (12), and being pushed up by the first elastic member (12); said moving element (13) being provided with a carrying member (132) at the side near the contact member (111) of said contact switch (110) to block the contact member (111), and the through hole (133) being set up on the carrying member (132), which is not aligned with the contact member (111) of said contact switch (110) yet kept in line; said moving element (13) being provided with an upward extending second post (134) on its top; a fixing seat (15), having a sustaining stake (151) on its top, worn by a second elastic member (16) to support said slab (17), and said slab (17) being provided with a pressing bar (171) extending to the top of the second post (134), where the pressing bar (171) and the second post (134) are perpendicular to each other and in a top-down contact.
